**Europäisches Patentamt**

**European Patent Office**

**Office européen des brevets**

(19)

(11) Veröffentlichungsnummer : **0 391 262 B1**

(12) **EUROPÄISCHE PATENTSCHRIFT**

(45) Veröffentlichungstag der Patentschrift :
**28.10.92 Patentblatt 92/44**

(21) Anmeldenummer : **90106072.3**

(22) Anmeldetag : **29.03.90**

(51) Int. Cl.⁵ : **B23B 31/26**

(54) **Spannvorrichtung zum axialen Spannen eines Werkzeugkopfes an einer Werkzeugmaschinenspindel.**

(30) Priorität : **05.04.89 DE 3910965**
**28.11.89 DE 3939227**

(43) Veröffentlichungstag der Anmeldung :
**10.10.90 Patentblatt 90/41**

(45) Bekanntmachung des Hinweises auf die
Patenterteilung :
**28.10.92 Patentblatt 92/44**

(84) Benannte Vertragsstaaten :
**AT BE CH DE ES FR GB IT LI LU NL SE**

(56) Entgegenhaltungen :
**EP-A- 0 291 048**
**DE-C- 3 719 451**
**US-A- 3 323 419**

(73) Patentinhaber : **Hertel Aktiengesellschaft Werkzeuge + Hartstoffe**
**Wehlauer Str. 71-73**
**W-8510 Fürth (DE)**

(72) Erfinder : **Kohlbauer, Johann**
**Forchheimer Strasse 13**
**W-8553 Ebermannstadt (DE)**
Erfinder : **Jäger, Horst**
**Pappenheimer Strasse 14**
**W-8500 Nürnberg 60 (DE)**

(74) Vertreter : **Tergau, Enno, Dipl.-Ing.**
**Tergau & Pohl Patentanwälte Mögeldorfer Hauptstrasse 51**
**W-8500 Nürnberg 30 (DE)**

## Beschreibung

Die Erfindung betrifft eine Spannvorrichtung der im Oberbegriff des Anspruches 1 genannten Art, wie sie beispielsweise bekannt ist aus EP-A1-0 291 048.

Die Spindeln moderner Werkzeugmaschinen arbeiten mit sehr hohen Umfangsgeschwindigkeiten und unterliegen wegen ihrer hohen Zerspanungsleistungen einer verstärkten Erwärmung. Es wird daher meistenteils mit Spannvorrichtungen gearbeitet, bei denen die Werkzeuge plan gegen eine plane Gegenfläche der Maschinenspindel gezogen werden, um eine hohe Axialgenauigkeit und Steifigkeit zu gewährleisten. Dabei erfolgt das Spannen von innen nach außen gegenüber der rohrartigen Spannhülse des Werkzeuges, um die bei den hohen Umfangsgeschwindigkeiten unvermeidlichen Fliehkräfte sicher aufzufangen.

Eine sichere Spannung erfordert dabei sehr hohe Spanndrücke, zu deren Aufnahme Punktbelastungen der Spannantriebsglieder nachteilig sind. Der Erfindung liegt daher die Aufgabe zugrunde, eine Spannvorrichtung der eingangs genannten Art zu schaffen, die ein störungsfreies Arbeiten der Spannantriebsglieder sicherstellt und Punktbelastungen der Spannantriebsglieder weitgehend vermeidet. Diese Aufgabe wird durch die Merkmalskombination des Anspruches 1 gelöst. Diese Lösung gewährleistet hohe Spanndrücke, die durch vergleichsweise begrenzte Spannantriebskräfte aufbringbar sind. Wesentlich ist dabei auch, daß als Spannantriebskräfte in erster Linie nur Druckkräfte auftreten. Dadurch wird das Auftreten von Passungsrost vermieden. Die Übertragungsglieder für den Spanndruck können außerdem aus Hartmetall oder Keramik gefertigt sein, die eine zwar nur geringe Zugfestigkeit, dafür jedoch eine hohe Druckfestigkeit aufweisen. Die Druckfestigkeit und die Verhinderung von Passungsrost können noch durch Beschichtungen verbessert werden.

Anspruch 2 gewährleistet eine besonders vorteilhafte, einfache Übertragung des vom Spannantrieb aufgebrachten Spanndruckes auf den Werkzeugkopf.

Durch die konstruktive Ausbildung des Erfindungsgegenstandes ist gewährleistet, daß der von der Spannvorrichtung ausgeübte Spanndruck im wesentlichen axial, also gegen die Spindelplanfläche gerichtet ist.

Die spitzwinklige Stellung der Spannschräge für die Herstellung und Aufrechterhaltung des Spannendzustandes ist so getroffen, daß sie für eine große Kraftübersetzung und Erhaltung der Spannkraft auch bei einem Abfall der Spannantriebskraft im Selbsthemmungsbereich liegten kann.

Weitere Ausführungsformen und Vorteile des Erfindungsgegenstandes werden anhand der in den Figuren dargestellten Ausführungsbeispiele näher erläutert. Es zeigen:

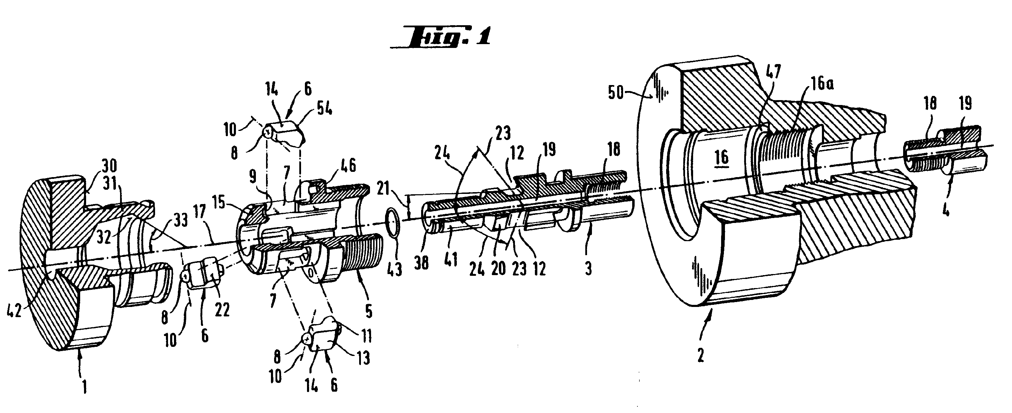

Fig. 1 eine Explosionsdarstellung der Spannvorrichtung mit ihren wesentlichen Einzelteilen;

Fig. 2 in Lösestellung - teilweise im Schnitt - die Spindel und davor das Werkzeug;

Fig. 3 eine perspektivische, teilgeschnittene Darstellung der Spannvorrichtung mit zwar eingeführtem, jedoch noch nicht gespanntem Werkzeug;

Fig. 4 eine Darstellung entsprechend Fig. 3, wobei jedoch das Werkzeug an der Spindel im Spannendzustand gespannt ist;

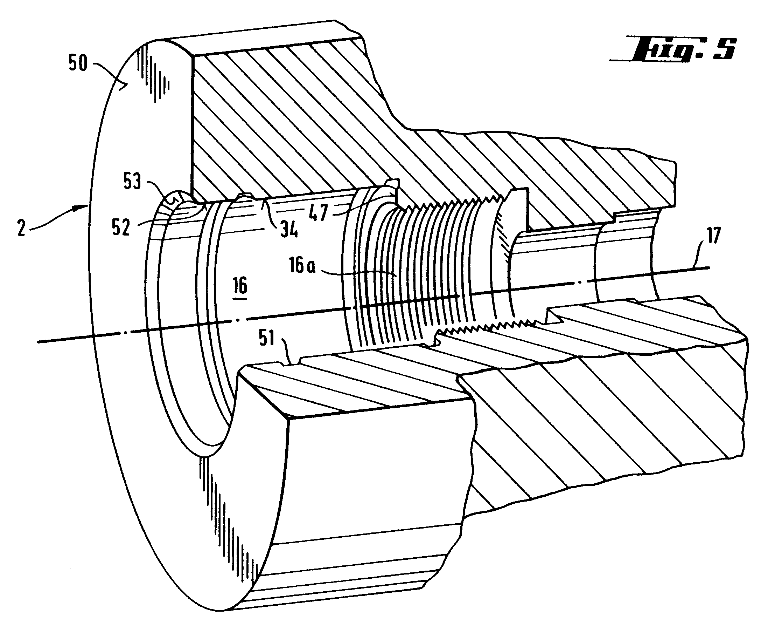

Fig. 5 eine Darstellung der Spindel;

Fig. 6 eine Explosionsdarstellung nur der Führungsbuchse mit den ihr zugeordneten Spreizhebeln;

Fig. 7 eine Einzeldarstellung des Zugbolzens, teilweise im Schnitt;

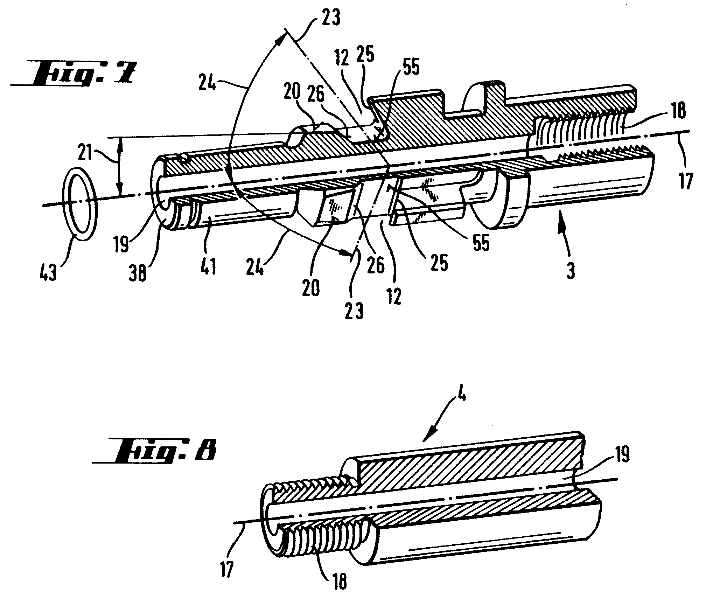

Fig. 8 eine Darstellung der bei montierter Spannvorrichtung mit dem Zugbolzen fest verbundenen, als Antriebsmittel auf diesen wirkenden Zugstange;

Fig. 9 eine Schnittdarstellung entsprechend der Linie A-A in Fig. 10 einer modifizierten Ausführungsform der Spannvorrichtung gemäß Fig. 1 mit einem durch Federkraft beaufschlagten Rückholring zur Einwärtsschwenkung der Spreizhebel in die Lösestellung der Spannvorrichtung, wobei die Spannteile oberhalb der Mittellängsachse in Spannstellung und unterhalb der Mittellängsachse in Lösestellung dargestellt sind;

Fig. 10 einen Schnitt entsprechend der Linie B-B in Fig. 9;

Fig. 11 einen Schnitt entsprechend der Linie C-C in Fig. 9;

Fig. 12 eine Schnittdarstellung entsprechend Fig. 9 durch eine modifizierte Ausführungsform, bei der die Spannschrägen des Zugbolzens Teil eines Druckringes aus hochdruckfestem Werkstoff sind.

Die wesentlichen, in den Figuren dargestellten Bestandteile der Spannvorrichtung sind der nachstehend kurz "Werkzeug (1)" genannte Werkzeughalter, die Spindel (2) der Werkzeugmaschine, der Zugbolzen (3), die Zugstange (4) und die Führungsbuchse (5) zur Führung von Zugbolzen (3) und Zugstange (4) gemeinsam mit den ihr zugeordneten Spreizhebeln (6). Die Spreizhebel (6) sind klemmkörperartige Spannelemente, von denen mindestens zwei gleichmäßig über den Umfang verteilt sind. Die Spreizhebel (6) sind in am Umfang der Führungsbuchse (5) angeordneten, diese radial durchsetzenden Ausnehmungen (7) schwenkbar gelagert. Die Lagerung ist beispielsweise eine Kugel- oder Zylindersegmentlagerung. Dazu ist das im Montagezustand dem Werkzeug (1) zugewandte Ende der Spreizhebel (6) mit einer konvexen, kugel- bzw. walzensegmentartigen Erhebung (8) versehen, mit der sich die Spreizhebel (6) an den im Montagezustand dem Werkzeug zugewandten, schalenförmig ausgemuldeten Flanken (9) der Ausnehmungen (7) abstützen. Die theoretischen Schwenkachsen der Spreizhebel (6) in Montageendstellung sind mit (10) gekennzeichnet (Fig. 6).

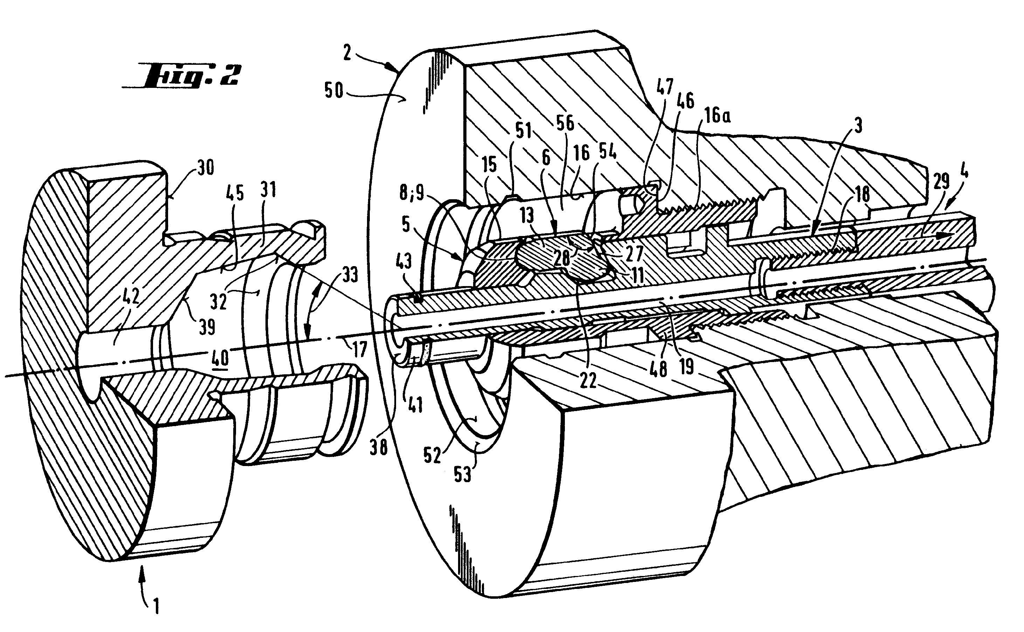

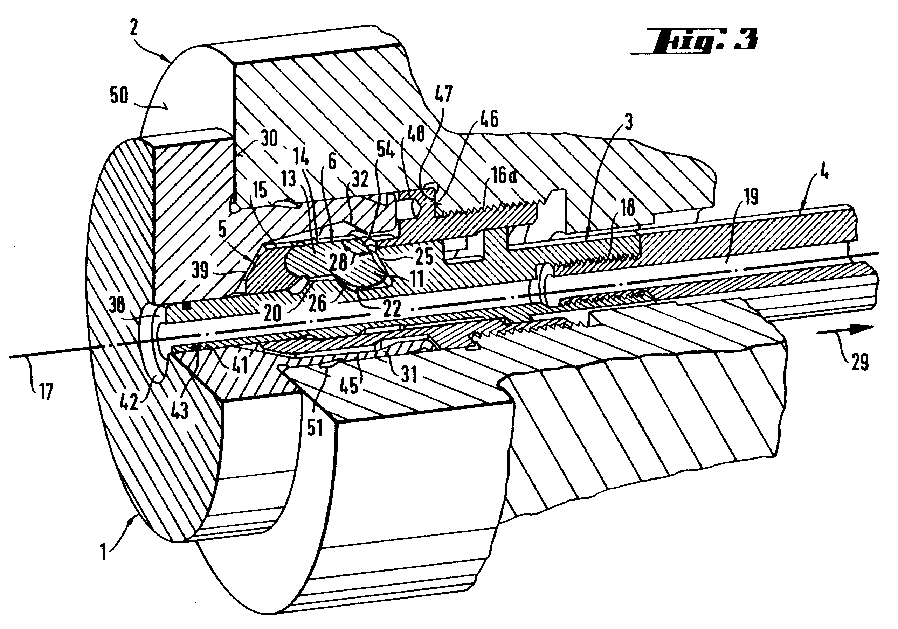

In Seitenansicht sind die Spreizhebel (6) im wesentlichen L-oder winkelförmig ausgebildet, wobei sie in Lösestellung (Fig. 2, 3) mit ihrem L-Steuerschenkel (11) in jeweils eine Umfangsausnehmung (12) des Zugbolzens (3) eintauchen derart, daß ihr L-Druckschenkel (13) nicht mit seinem Rücken (14) über den Umfang der Nachbarbereiche der Ausnehmungen (7) hinaussteht, sondern innerhalb des diese Nachbarbereiche umgebenden, theoretischen Zylinders zu liegen kommt. Diese Nachbarbereiche sind nämlich durch den Mantel des Hohlzylinderzapfens (15) der Führungsbuchse (5) gebildet. Die Führungsbuchse (5) ist in Axialrichtung in die Spindel (2) eingeschraubt und folglich funktionsmäßig mit dieser einstückig. Sie dient u.a. zur axialen Verschiebelagerung des von ihr hülsenartig umgebenen Zugbolzens (3). In Montageendstellung ist die Führungsbuchse (5) in Axialrichtung von der Seite des Werkzeuges her in die Spindel (2) eingeschraubt. Dazu weist die Spindel (2) eine ausgehend von der Gegenstirnfäche (50) in Richtung der Zentralachse (17) verlaufende Zentralausnehmung (16) auf, die an ihrem dem Werkzeug (1) abgewandten Ende in ein zentrales Innengewinde (16a) ausmündet, welches zur Verschraubung der Führungsbuchse (5) mit der Spindel (2) dient.

Der Zugbolzen (3) ist in der Führungsbuchse (5) geführt. Die Fixierung des Zugbolzens (3) in seiner Einbaustellung erfolgt durch die von der Spindelrückseite her in den Zugbolzen (3) eingeschraubte Zugstange (4). Die Längsachse von Zugbolzen (3) und Zugstange (4) ist in Montageendstellung identisch mit der Zentralachse (17) der Spannvorrichtung. Die Verschraubung zwischen Zugbolzen (3) und Zugstange (4) erfolgt im Bereich des Verbindungsgewindes (18) zwischen diesen beiden Teilen.

Die Zugstange (4) und der Zugbolzen (3) sind jeweils mit einer mit der Zentralachse (17) koaxialen Durchgangsbohrung (19) für Kühlmittel oder zur Durchführung von nicht dargestellten Betätigungselementen für beispielsweise aussteuerbare Werkzeuge versehen.

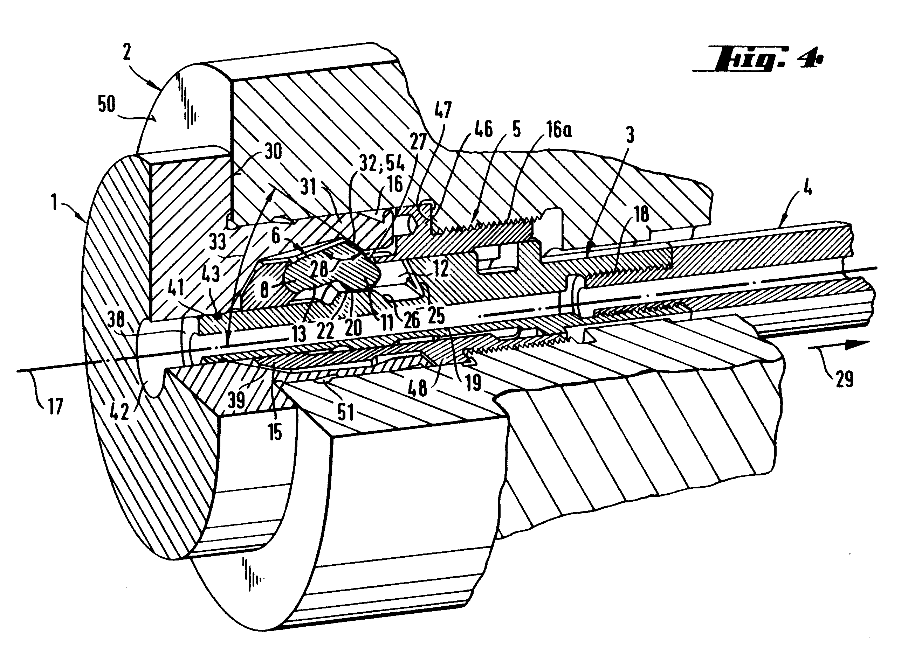

Der Zugbolzen (3) trägt auf seinem Umfang benachbart zu den Umfangsausnehmungen (12) Spannschrägen (20). Diese Spannschrägen (20) sind Flächen bzw. Flächensegmente, die einen sehr spitzen, sich in Richtung auf das spindelseitige Ende hin schließenden Winkel (21) mit der Zentralachse (17) einschließen. In Spannendstellung liegen die Spreizhebel (6) mit ihren L-Steurschenkeln (11) auf den Spannschrägen (20) auf, wie dies beispielsweise aus Fig. 4 ersichtlich ist. Dazu sind die den Spannschrägen (20) zugewandten Innenseiten (22) der L-Steuerschenkel (11) nach Art einer Kugel- oder Walzensegment-Mantelfläche gewölbt, um besonders leicht und verschleißfrei auf den Spannschrägen (20) gleiten zu können. Der spitze Winkel (21) der Spannschrägen (20) ist so bemessen, daß sich für eine große Kraftübersetzung eine Selbsthemmung ergibt. Dadurch wird die auf den Zugbolzen (3) übertragene Spannkraft auch dann aufrechterhalten, wenn der auf die Zugstange (4) einwirkende Spanndruck einmal abfallen sollte.

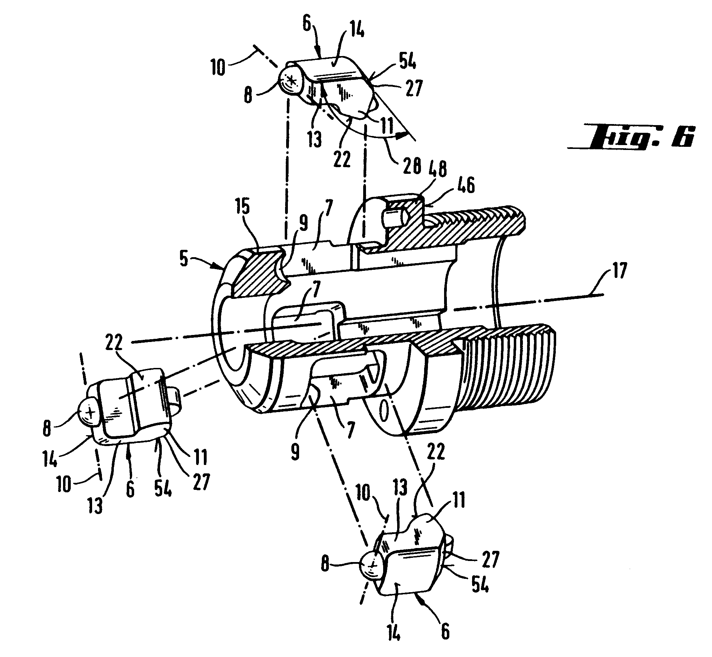

Die Mittelachsen (23) der Umfangsausnehmungen (12) des Zugbolzens (3) bilden mit der Zentralachse (17) einen spitzen, sich zur Werkzeugseite (1) hin öffnenden Neigungswinkel (24) (Fig. 7) von 45° bis 75°, insbesondere von ca. 60°. Etwa denselben Winkel von ca. 60° bilden auch etwa die beiden Flanken (25, 26) der Umfangsausnehmungen (12) des Zugbolzens (3) mit der Zentralachse (17). Die innere Spannschrägenflanke (26) der Umfangsausnehmungen (12) dient als Steuerschräge, an der die L-Steuerschenkel der Spreizhebel (6) in Lösestellung mit ihren Innenseiten (22) anliegen. Der spitze Neigungswinkel (24) der Spannschrägenflanken (26) mit der Zentralachse (17) ist mit ca. 60° wesentlich größer als der spitze Winkel (21) der Spannschrägen (20). Er liegt daher außerhalb des Selbsthemmungsbereiches. Die äußeren Rückholschrägenflanken (25) der Umfangsausnehmungen (12) dienen zur zwangsweisen, radial einwärts gerichteten Rückführung der Spreizhebel (6) in ihre Lösestellung (Fig. 2, 3).

Die Außenseite (27) des L-Steuerschenkels (11) eines jeden Spreizhebels (6) bildet mit dem Rücken (14) von dessen L-Druckschenkel (13) einen stumpfen Winkel (28). Der in Spreizstellung aus der Umfangsfläche des Hohlzylinderzapfens (15) der Führungsbuchse (5) heraustauchende Teil der Außenseite (27) eines jeden Spreizhebels (6) überträgt den im wesentlichen in axialer Spannrichtung (29) wirkenden Spanndruck vom Zugbolzen (3) auf das Werkzeug (1). Dazu ist das in Spannstellung mit seiner axialen Stirnfläche (30) an der entsprechenden Gegenfläche der Spindel (2) anliegende Werkzeug (1) mit einer in Richtung auf das spindelseitige Ende rohrartig vorstehenden Spannhülse (31) versehen. Die Spannhülse (31) trägt auf ihrem Innenumfang eine Ringfläche (32) als Gegenfläche zu den Druckseiten der Spreizhebel (6). Die Ringfläche (32) bildet einen sich in Richtung auf das spindelseitige Ende (2) hin schließenden, spitzen Winkel (33) mit der Zentralachse (17). Über die Ringfläche (32) üben im Spannzustand die Spreizhebel (6) einen Axialdruck aus, mit der die axiale Stirnfläche bzw. Planfläche (30) des Werkzeuges (1) gegen die entsprechende Gegenfläche der Spindel (2) gedrückt werden.

Die äußere Umfangsfläche der Spannhülse (31) entspricht gestaltungsmäßig der Innenkontur der Umfangswand (34) der Zentralausnehmung (16).

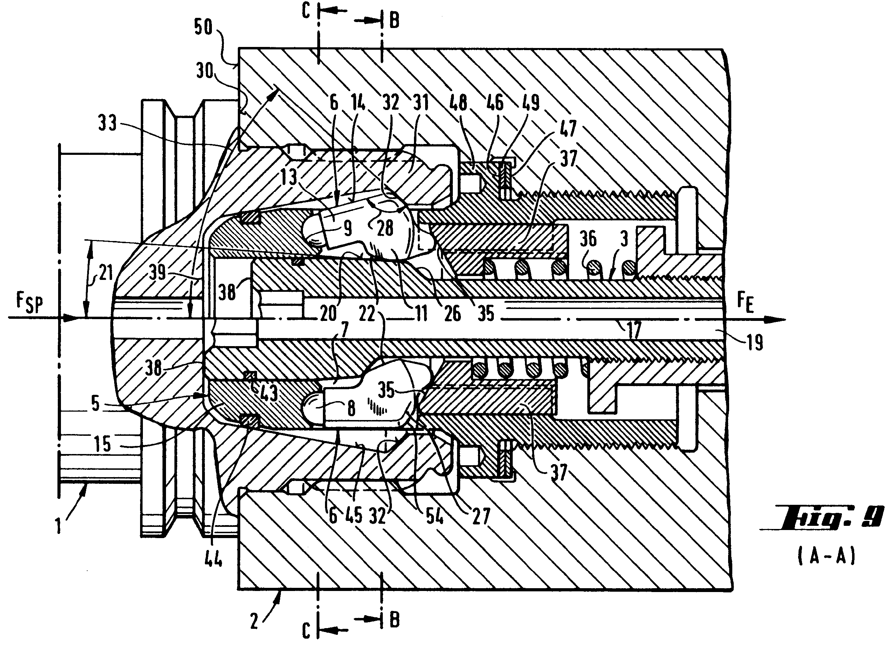

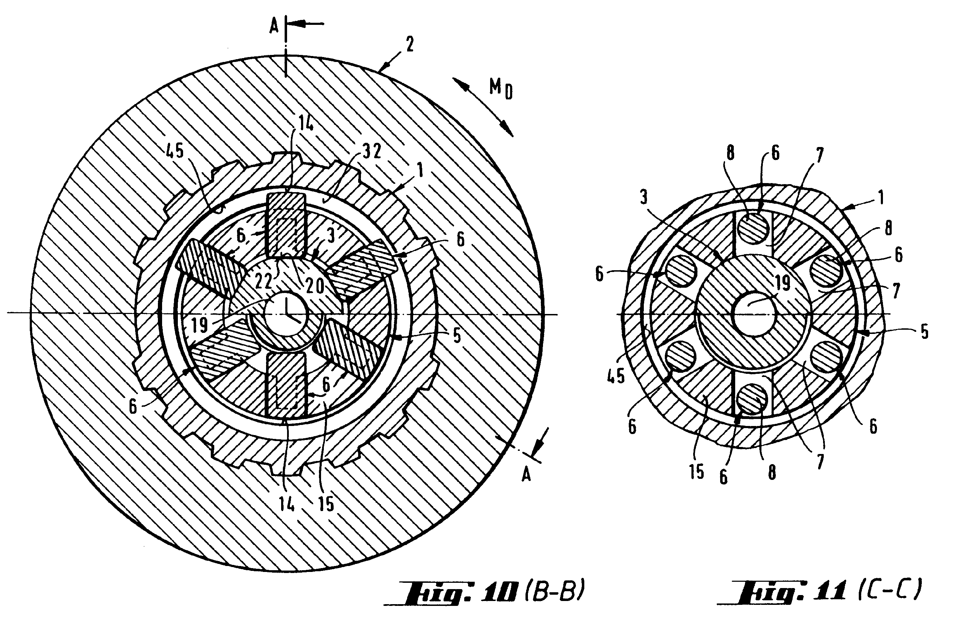

Bei der Ausführungsform gemäß Fig. 10 ist die Rückholschräge für die Spreizhebel (6) nicht einstückiger Bestandteil des Zugbolzens (3), sondern die Stirnseite (35) (Fig. 9) einer durch die Druckfeder (36) in Richtung auf das Werkzeug (1) beaufschlagten, den Zugbolzen (3) umgebenden Rückholhülse (37). Diese getrennte Ausführungsform ist dann bevorzugt, wenn der Zugbolzen (3) mit seinem Vorderende (38) bei seiner Überführung in die Lösestellung gleichzeitig gewissermaßen als Auswerferstift gegen die innere Ring-Stirnwand (39) (Fig. 2, 9) des durch die Spannhülse (31) umhüllten Ringraumes (40) wirksam werden soll. Dadurch ist nämlich eine erhöhte Hub- bzw. Verschiebelänge des Zugbolzens (3) bei seiner Überführung aus der Spannstellung (Fig. 4) in die vorgeschobene Lösestellung (Fig. 2, 3) in der Regel möglich.

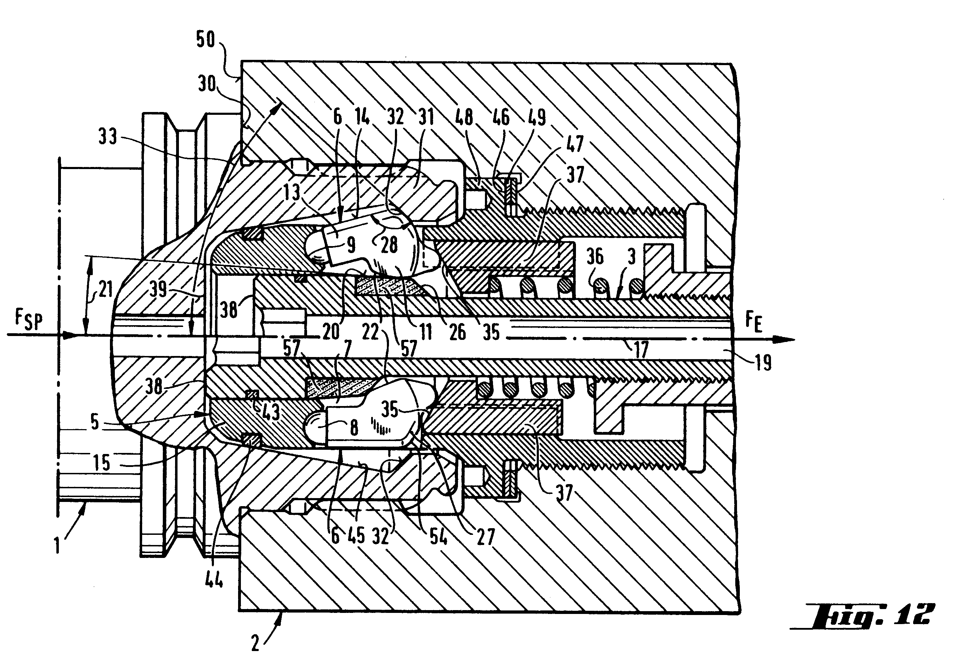

Der Zugbolzen (3) reicht in Montageendstellung mit seinem Vorderende (41) in eine entsprechende Führungsbohrung (42) des Werkzeuges (1) hinein. Das Vorderende (41) des Zugbolzens (3) ist von einer Ringdichtung (43) umgeben, die mit der Innenwand der Führungsbohrung (42) zusammenwirkt. Eine ebensolche Ringdichtung (44) kann den Zylinderzapfen (15) der Führungsbuchse (5) umgeben. Diese Ringdichtung (44) (Fig. 9, 12) liegt dabei an der den Ringraum (40) bildenden Ringwand (45) der Spannhülse (31) an.

Die Führungsbuchse (5) kann mit einer Ringstirnfläche (46) in Anlage an eine entsprechende Ringgegenfläche (47) der Spindel (2) gebracht werden. Dazu ist die Ringstirnfläche (46) Bestandteil eines die Führungsbuchse (5) flanschartig umgebenden Ringflansches (48). Zwischen Ringstirnfläche (46) und Ringgegenfläche (47) sind Distanzscheiben (49) (Fig. 9,12) einlegbar, mit denen ein etwaiger Verschleiß der Gegenstirnfläche (50) der Spindel (2) zur axialen Stirnfläche (30) des Werkzeuges (1) kompensiert werden kann. Dadurch läßt sich nämlich die Einschraubtiefe der Führungsbuchse (5) in die Spindel (2) wahlweise verstellen.

Die Umfangswand (34) der Zentralausnehmung (16) der Spindel (2) ist in Axialrichtung unterteilt durch eine Ringteilnut (51). Die dadurch abgeteilte, mündungsseitige, äußere Ringhüllfläche (52) der Zentralausnehmung (16) dient beispielsweise als reine Zentrierfläche. Sie ist dazu an ihrem Vorderende mit einer Einführungsschräge (53) für das rohrartige Ende der Spannhülse (31) des Werkzeuges (1) versehen.

Die Spannvorrichtung arbeitet wie folgt: In der in Fig. 2 dargestellten Lösestellung befindet sich der Zugbolzen (3) in seiner entgegen der Spannrichtung (29) vorgeschobenen Löseendstellung. In dieser Stellung liegen die Spreizhebel (6) in radial eingezogener Lösestellung im Hohlzylinderzapfen (15) der Führungsbuchse (5) derart verborgen, daß ihre Rücken (14) nicht über den Hüllzylinder des Hohlzylinderzapfens (15) radial nach außen vorstehen. Dadurch kann das Werkzeug (1) mit seiner rohrartigen Spannhülse (31) ungehindert in den zwischen dem Außenumfang des Zapfens (15) und dem Innenumfang der Zentralausnehmung (16) gebildeten Ringraum (56), nämlich in die Einführungsöffnung der Spannvorrichtung eingeführt werden, bis das Werkzeug (1) mit seiner axialen Stirnfläche (30) an die Gegenstirnfläche (50) der Spindel (2) anschlägt.

Nunmehr wird die Zugstange (4) seitens der Werkzeugmaschine in Spannrichtung (29) beaufschlagt. Die Zugstange (4) nimmt den Zugbolzen (5) mit. Dadurch gleiten die Spannschrägenflanken (26) der Umfangsausnehmungen (12) an den Innenseiten (22) der L-Steuerschenkel der Spreizhebel (6) entlang und spreizen die Spreizhebel (6) dadurch radial nach außen. Die inneren Spannschrägenflanken (26) bilden also eine Spreiz- oder Steuerschräge und wirken damit auf die Spreizhebel (6) ein. Die Spreizhebel (6) legen sich dabei mit den oberen Enden (Zwickelbereiche 54) der Außenseiten (27) ihrer L-Steuerschenkel (11) an die vorderseitige Ringfläche (32) des Ringraumes (40) der Spannhülse (31) an und beaufschlagen diese in Spannrichtung (29).

Der Anzugshub der Zugstange (4) bzw. des Zugbolzens (5) ist so bemessen, daß die inneren Spannschrägenflanken (26) der Umfangsausnehmungen (12), also die Steuer- oder Spreizschrägen des Zugbolzens (3) außer Kontakt mit den Innenseiten (22) der L-Steuerschenkel (11) der Spreizhebel (6) gelangen. Die Spreizhebel (6) gleiten dadurch mit den Enden ihren Innenseiten (22) auf die Spannschrägen (20) des Zugbolzens (5) auf, deren Winkel (21) mit der Zentralachse (17) zur Herstellung einer Selbsthemmung zwischen den Spannschrägen (20) und dem L-Steuerschenkel (11) der Spreizhebel (6) wesentlich spitzer bemessen ist.

Die Spreizhebel (6) stützen sich bei ihrer Spreizbewegung und in ihrer Spreizendstellung (Fig. 4, 9 und 12) mit den Erhebungen (8) ihrer L-Druckschenkel (13) axial gegen die ausgemuldeten Flanken (9) der Ausnehmungen (7) der Führungsbuchse (5) ab. Daher sind beide L-Schenkel (11, 13) der Spreizhebel (6) in Spannstellung lediglich auf Druck und nicht auf Zug beansprucht, was von besonderem Vorteil ist. Daher können beispielsweise die Spreizhebel (6) aus einem sehr harten, aber weniger zugfesten Werkstoff, z.B. aus Hartmetall oder einem keramischen Werkstoff bestehen. Es wird dadurch auch das Auftreten von Passungsrost vermieden, wie er besonders beim Arbeiten mit Kühlflüssigkeit bei Spannvorrichtungen zu besorgen ist.

Zum Lösen des Werkzeuges (1) wird der Zugvorgang seitens der Zugstange (4) reversiert. Die Zugstange (4) wird in Gegenrichtung zur Spannrichtung (29) nach vorne gestoßen. Dabei werden die Spreizhebel (6) mit ihren L-Steuerschenkeln (11) durch die Rückholschrägenflanken (25) der Umfangsausnehmungen (12) des Zugbolzens (3) wieder in die Umfangsausnehmungen (12) zurückgedrückt. Als Rückholsicherung dient dabei die Schrägstellung der äußeren Rückholschrägenflanken (25) der Umfangsausnehmungen (12) (spitzer Neigungswinkel 24). Jedenfalls beaufschlagt die äußere Rückholschrägenflanke (25) der Umfangsausnehmungen (12) die Außenseiten (27) des L-Steuerschenkels (11) der Spreizhebel (6), die dadurch zwangsgeführt um ihre theoretischen Schwenkachsen (10) radial nach innen schwenken, wobei die innenliegenden L-Steuerschenkel (11) in Richtung auf die Ausnehmungsböden (55) in die Umfangsausnehmungen (12) eintauchen, bis die Rücken (14) der außenliegenden L-Druckschenkel (13) der Spreizhebel (6) nicht mehr über den Umfang des Hohlzylinderzapfens (15) der Führungsbuchsen (5) hinausstehen. In diesem Zustand (Fig. 2, 3) kann das Werkzeug (1) behinderungsfrei entgegen der Spannrichtung (29) von der Spindel (2) abgezogen werden.

Bei der Ausführungsform gemäß Fig. 9 liegt ein vergrößerter Lösehub des Zugbolzens (3) vor, der dadurch gewissermaßen als Auswerferstift eine Zusatzfunktion ausübt und die sichere Lösung des Werkzeuges (1) von der Spindel (2) bewirkt. Hier dient die Rückholhülse (37) zur radialen Einwärtsschwenkung der Spreizhebel (6) in ihre Ruhe- bzw. Lösestellung analog Fig. 2, 3. Dabei wird der einwärtsgerichtete, von der Rückholhülse (37) ausgeübte Rückholschub erzeugt von der Druckfeder (36). Dieser Rückholhub ist kleiner als der Löse- bzw. Auswurfschub der Zugstange (4) bzw. des Zugbolzens (3).

Bei der Ausführungsform nach Fig. 12 sind die Spannschrägenflanken (26) Teil eines in den Umfang des Zugbolzens (3) eingelassenen Druckringes (57) aus hochdruckfestem Werkstoff, z.B. aus Hartmetall oder Keramik.

Bezugszeichenliste

1 Werkzeug
2 Spindel
3 Zugbolzen
4 Zugstange
5 Führungsbuchse
6 Spreizhebel
7 Ausnehmung
8 Erhebung
9 Flanke
10 Schwenkachse
11 L-Steuerschenkel
12 Umfangsausnehmung
13 L-Druckschenkel
14 Rücken
15 Hohlzylinderzapfen
16 Zentralausnehmung
16a Innengewinde
17 Zentralachse
18 Verbindungsgewinde
19 Durchgangsbohrung
20 Spannschräge
21 Spannschrägenwinkel
22 Innenseite
23 Mittelachse
24 Neigungswinkel
25 Rückholschrägenflanke
26 Spannschrägenflanke
27 Außenseite
28 stumpfer Winkel
29 axiale Spannrichtung
30 axiale Stirnfläche
31 Spannhülse
32 Ringfläche
33 spitzer Winkel
34 Umfangswand
35 Stirnseite
36 Druckfeder
37 Rückholhülse
38 Vorderende
39 Ring-Stirnwand
40 Ringraum
41 Vorderende
42 Führungsbohrung
43 Ringdichtung
44 Ringdichtung
45 Ringwand
46 Ringstirnfläche
47 Ringgegenfläche
48 Ringflansch
49 Distanzscheibe
50 Gegenstirnfläche
51 Ringteilnut
52 Ringhüllfläche
53 Einführungsschräge
54 Zwickelbereich
55 Ausnehmungsboden
56 Ringraum
57 Druckring

**Patentansprüche**

1. Spannvorrichtung zum axialen Spannen eines Werkzeugkopfes bzw. Werkzeuges (1) an einer Werkzeugmaschinenspindel (2).
   a) Das Werkzeug (1)
      aa) ist mit einer rohrartigen Spannhülse (31) in Richtung der Zentralachse (17) in eine stirnseitige Ausnehmung (16) der Werkzeugmaschinenspindel (2) einführbar und
      bb) ist in Axialrichtung (29) durch Spreizglieder spannbar, die
         -gleichmäßig um die Zentralachse (17) verteilt angeordnet sind,
         -mittels eines zentralen Spannantriebes auseinanderspreizbar sind und
         -dadurch die Innenwand der Spannhülse (31) beaufschlagen

--so daß das Werkzeug (1) mit einer Stirnfläche (30) in etwa eine Plananlage an einer Gegenstirnfläche (50) des Endes der Werkzeugmaschinenspindel (2) gezogen wird.

Kennzeichen

c) Die Spreizglieder sind **einarmige, mit ihrem dem Werkzeug (1) zugewandten Ende** an der Spindel (2) gelagerte Spreizhebel (6).

d) Das freie, **dem Werkzeug (1) abgewandte** Schwenkende eines jeden Spreizhebels (6) ist in einer die Zentralachse (17) enthaltenen und radial zu dieser verlaufenden Radialebene nach außen ausschwenkbar.

e) In Spannstellung beaufschlagen die ausgeschwenkten Spreizhebel (6) etwa in ihrer Längsrichtung mit ihren Schwenkenden eine auf der Innenwand der Spannhülse (31) angeordnete Ringfläche (32) im wesentlichen in axialer Spannrichtung (29)

2. Spannvorrichtung nach Anspruch 1
        gekennzeichnet durch
einen
        - in der Werkzeugmaschinenspindel (2) koaxial zu dieser längsverschiebbar gelagerten,
        - vom Spannantrieb in Spannrichtung (29) beaufschlagbaren Zugbolzen (3) und durch auf dem Zugbolzenumfang angeordnete Spannschrägen (20, 26), die
        - spitzwinklig (Winkel 21, 24) zur Zentralachse (17) mit sich in Spannrichtung (29) schließenden Winkelschenkeln verlaufen und
        - zur Spannantriebsübertragung von den freien Schwenkenden der Spreizhebel (6) radial nach innen in den Verschiebeweg des Spannantriebes hineinstehende Steuerschenkel (11) beaufschlagen und dadurch die Schwenkenden der Spreizhebel (6) radial nach außen drücken.

3. Spannantrieb nach Anspruch 1 oder 2
        dadurch gekennzeichnet,
daß die Spreizhebel (6) in Ausnehmungen (7) gelagert sind, die den Umfang einer mit der Werkzeugmaschinenspindel (2) fest verbundenen, den Zugbolzen (3) umgebenden Führungsbuchse (5) durchsetzen und sich mit ihren Lagerenden an **den dem Werkzeug (1) zugewandten Flanken (9)** der Ausnehmungen (7) abstützen.

4. Spannvorrichtung nach Anspruch 3
        dadurch gekennzeichnet,
daß die Lagerenden der Spreizhebel (6) eine konvexe kugel- oder zylindersegmentartige Erhebung aufweisen und damit nach Art einer Kugel- oder Zylindersegmentlagerung an einer schalenförmig ausgemuldeten Flanke der Ausnehmungen (7) anliegen.

5. Spannvorrichtung nach einem oder mehreren der vorhergehenden Ansprüche
        gekennzeichnet durch
eine dem Großbuchstaben L angenäherte, winkelartige Form der Spreizhebel (6), wobei
        a) der **drehgelagerte L**-Schenkel (13) im wesentlichen den als Druckschenkel wirksamen Hebelarm des einarmigen Hebels bildet und
        b) der **das Schwenkende enthaltende L**-Schenkel (11) als den Spreizantrieb steuernder Steuerschenkel in den Verschiebeweg des mit Spannschrägen (20, 26) versehenen Spannantriebes (Zugbolzen 3) radial nach innen steht.

6. Spannvorrichtung nach Anspruch 5
        dadurch gekennzeichnet,
daß in Lösestellung die Spreizhebel (6)
        - mit ihrem als Druckschenkel wirksamen L-Druckschenkel (13) etwa parallel zur Zentralachse (17) verlaufend in den Ausnehmungen (7) der Führungshülse (5) und
        - **mit ihrem L-Steuerschenkel (11)** in Umfangsausnehmungen (12) des Zugbolzens (3) einliegen, wobei die in Spannrichtung (29) weisenden Flanken der Umfangsausnehmungen (12) als Spannschrägen (26) einen spitzen, sich in Spannrichtung (29) schließenden Neigungswinkel (24) mit der Zentralachse (17) einschließen.

7. Spannvorrichtung nach Anspruch 6
        dadurch gekennzeichnet,
daß der Neigungswinkel (24) zwischen 45° und 75°, insbesondere ca. 60° beträgt.

8. Spannvorrichtung nach einem der Ansprüche 5-7
        dadurch gekennzeichnet,
daß die Lagerenden der in den Umfangsausnehmungen (12) einliegenden L-Steuerschenkel (11) mit nach Art einer Kugel- oder Walzensegment-Mantelfläche konvex gewölbten Innenseiten (22) an jeweils einer als Spannschräge wirksamen, inneren Spannschrägenflanke (26) der Umfangsausnehmung (12) anliegen.

9. Spannvorrichtung nach einem der Ansprüche 3-8
        dadurch gekennzeichnet,
daß auf dem Umfang des Zugbolzens (3) entgegen der Spannrichtung (29) an jede Umfangsausnehmung (12) angrenzend je eine Spannschräge (20) angeordnet ist, die einen spitzen, sich in Spannrichtung (29) schließenden Winkel (21) mit der Zentralachse (17) bildet, der kleiner ist als der Neigungswinkel (24) der Umfangsausnehmungen (12) bzw. der ihnen zugeordneten inneren Spannschrägenflanken (26).

10. Spannvorrichtung nach Anspruch 9
dadurch gekennzeichnet,
eine Bemessung des Spannschrägenwinkels (21) derart, daß die Anlage des L-Steuerschenkels (11) des Spreizhebels (6) selbsthemmend ist.

11. Spannvorrichtung nach einem oder mehreren Ansprüchen
gekennzeichnet durch
eine etwa dem Neigungswinkel (24) entsprechende, etwa parallele Lage der als Rückholschrägen wirksamen äußeren Flanken (25) zu den inneren Spannschrägenflanken (26) derart, daß jede Umfangsausnehmung (12) den ihr zugeordneten L-Steuerschenkel (11) des Spreizhebels (6) in Lösestellung beidflankig mit Spiel umgibt und bei einer Zugbolzen-Verschiebung aus der Spann- in die Lösestellung den L-Steuerschenkel (11) in Löserichtung beaufschlagt.

12. Spannvorrichtung nach einem oder mehreren Ansprüchen
dadurch gekennzeichnet,
daß der von den beiden L-Schenkeln (11, 13) des Spreizhebels (6) eingeschlossene Winkel (28) ein stumpfer Winkel ist.

13. Spannvorrichtung nach einem oder mehreren Ansprüchen
dadurch gekennzeichnet,
daß beim Spannen die Spreizhebel (6) mit den Zwickelbereichen (54) der Außenseiten (27) ihrer L-Steuerschenkel (11) aus den Ausnehmungen (7) der Führungsbuchse (5) hinausstehen und die Ringfläche (32) der Umfangswand (34) der Spannhülse (31 ) **zur Erzeugung axialen Spanndruckes** beaufschlagen.

14. Spannvorrichtung nach Anspruch 13,
dadurch gekennzeichnet,
daß die Ringfläche (32) durch einen Konusmantel gebildet ist, der einen spitzen, sich in Spannrichtung (29) schließenden Winkel (33) mit der Zentralachse (17) bildet.

15. Spannvorrichtung nach einem oder mehreren Ansprüchen
dadurch gekennzeichnet,
daß die werkzeugseitige Stirnseite (35) einer durch eine Druckfeder entgegen der Spannrichtung (29) beaufschlagten, den Zugbolzen (3) umgebenden Rückholhülse (37) als Rückholfläche an der Außenseite (27) des L-Steuerschenkels (11) der Spreizhebel (6) anliegt.

16. Spannvorrichtung nach einem oder mehreren Ansprüchen
dadurch gekennzeichnet,
daß das Vorderende (38) des Zugbolzens (3) als Auswerferstift gegen das Werkzeug (1) wirksam ist.

17. Spannvorrichtung nach einem oder mehreren Ansprüchen
dadurch gekennzeichnet,
daß der Zugbolzen (3) mit einer Durchgangsbohrung (19) für Kühlflüssigkeit o. dgl. versehen ist.

18. Spannvorrichtung nach einem oder mehreren Ansprüchen,
dadurch gekennzeichnet,
daß die Spannschrägenflanken (26) des Zugbolzens (3) Teil eines in den Zugbolzen (3) eingelassenen Druckringes (57) aus hochdruckfestem Werkstoff, z. B. aus Hartmetall oder Keramik sind.

19. Spannvorrichtung nach einem oder mehreren Ansprüchen,
gekennzeichnet durch
die Einlage mindestens einer axialen Distanzscheibe (49) zwischen Führungsbuchse (5) und Spindel (2).

## Claims

1. A clamping device for the axial clamping of a toolhead or tool (1) on a machine tool spindle (2).
   a) The tool (1)
   aa) can be introduced by a tubular clamping sleeve (31) in the direction of the central axis (17) into an end-face recess (16) of the machine tool spindle (2) and
   bb) is clampable in the axial direction (29) by expansion elements, which
   -are uniformly distributed round the central axis (17),
   -can be spread apart by means of a central clamping drive and
   -thereby act on the inner side of the clamping sleeve (31)
   --so that the tool (1) is drawn with an end face (30) into an approximately planar abutment on a counter end face (50) of the end of the machine tool spindle (2).
   Characteristic

c) The expansion elements are one-arm expansion levers (6) with their end facing the tool (1) mounted on the spindle (2).

d) The free pivoting end remote from the tool (1) of each expansion lever (6) can be pivoted outwards in a radial plane containing the central axis (17) and extending radially to the latter.

e) In the clamping position, the expansion levers (6) pivoted outwards act approximately in their longitudinal direction with their pivoting ends on an annular face (32) substantially in the axial clamping direction (29) said surface being arranged on the inner side of the clamping sleeve (31).

2. A clamping device according to claim 1,
characterized by
a draw bolt (3)
  - coaxially mounted in the machine tool spindle (2) for longitudinal displacement thereto,
  - acted on by the clamping drive in the clamping direction (29) and by means of clamping ramps (20, 26), which
  - extend at an acute angle (angles 21, 24) to the central axis (17) with angle sides narrowing in the clamping direction (29) and
  - for transmitting the clamping drive from the free pivoting ends of the expansion levers (6), act on control arms (11) projecting radially inwards into the displacement path of the clamping drive and thereby push the pivoting ends of the expansion levers (6) radially outwards.

3. A clamping device according to claim 1 or 2,
characterized in that
the expansion levers (6) are mounted in recesses (7) passing through the circumference of a guide bush (5) rigidly joined to the machine tool spindle (2), surrounding the draw bolt (3) and bear with their mounting ends on the sides (9) of the recesses (7) which face the tool (1).

4. A clamping device according to claim 3,
characterized in that
the mounting ends of the expansion levers (6) have a convex spherical or cylindrical segment-type raised portion and thus bear in the manner of a spherical or cylindrical segment-type mounting on a dish-shaped hollowed side of the recesses (7).

5. A clamping device according to one or more of the preceding claims,
characterized by
an angular type shape of the expansion levers (6) approximating to the capital letter L, wherein

a) the L-arm (13) mounted for rotation forms in essence the lever arm acting as a thrust arm of the one-arm lever, and

b) the L-arm (11) containing the pivoting end projects as the control arm controling the clamping drive radially inwards into the displacement path of the clamping drive (the draw bolt 3) provided with clamping ramps (20, 26).

6. A clamping device according to claim 5,
characterized in that
in the released position, the expansion levers (6) lie
  - in the recesses (7) of the guide bush (5) with their L-thrust arms (13) acting as the thrust arm extending approximately parallel to the central axis (17), and
  - with their L-control arm (11) in peripheral recesses (12) of the draw bolt (3),
in which arrangement the sides of the peripheral recesses (12) pointing in the clamping direction (29) form as clamping ramps (26) with the central axis (17) an acute angle of inclination (24) narrowing in the clamping direction (29).

7. A clamping device according to claim 6,
characterized in that
the angle of inclination (24) amounts to between 45° and 75°, in particular approximately 60°.

8. A clamping device according to one of claims 5 to 7,
characterized in that
the mounting ends of the L-control arms (11) lying in the peripheral recesses (12) bear with convex inner sides (22) curved in the manner of a spherical or cylindrical segment-type peripheral surface on one inner clamping ramp side (26) respectively of the peripheral recess (12), said ramp side acting as a clamping ramp.

9. A clamping device according to one of claims 3 to 8,
characterized in that
on the circumference of the draw bolt (3), there is arranged against the clamping direction (29), one clamping ramp (20) each adjoining each peripheral recess (12), and forming with the central axis (17) an acute angle (21) which narrows in the clamping direction (29) and is smaller than the angle of inclination (24) of the peripheral recesses (12) or of the inner clamping ramp sides (26) assigned to them.

10. A clamping device according to claim 9,
characterized by
dimensioning the clamping ramp angle (21) in such a way that the bearing of the L-control arm (11) of the expansion lever (6) is self-locking.

11. A clamping device according to one or more claims,
    characterized by
    a position of the outer sides (25), acting as return ramps, approximately corresponding to the angle of inclination (24), and being approximately parallel to the inner clamping ramp sides (26), in such a way that each peripheral recess (12) surrounds the L-control arm (11) of the expansion lever (6) in the released position on both sides with play and acts on the L-control arm (11) in the releasing direction during the displacement of the draw bolt from the clamping position into the releasing position.

12. A clamping device according to one or more claims,
    characterized in that
    the angle (26) formed by the two L-arms (11, 13) of the expansion lever (6) in an obtuse angle.

13. A clamping device according to one or more claims,
    characterized in that
    during the clamping action, the expansion levers (6) project with the wedge zones (54) of the outer sides (27) of their L-control arms (11) from the recesses (7) of the guide bush (5) and act on the annular face (32) of the peripheral wall (34) of the clamping sleeve (31) so as to produce an axial clamping pressure.

14. A clamping device according to claim 13,
    characterized in that
    the annular face (32) is formed by a control surface forming an acute angle (33) with the central axis (17), narrowing in the clamping direction (29).

15. A clamping device according to one or more claims,
    characterized in that
    the end face (35) on the tool side of a returning sleeve (37) loaded by a compression spring against the clamping direction (29) and surrounding the draw bolt (3) bears on the outer side (27) of the L-control arm (11) of the expansion levers (6) as a returning surface.

16. A clamping device according to one or more claims,
    characterized in that
    the front end (38) of the draw bolt (3) acts as an ejection pin against the tool (1).

17. A clamping device according to one or more claims,
    characterized in that
    the draw bolt (3) is provided with a through bore (19) for a cooling liquid or the like.

18. A clamping device according to one or more claims,
    characterized in that
    the clamping ramp sides (26) of the draw bolt (3) form part of a thrust collar (57) inserted into the draw bolt (3) and made of a highly pressure-resistant material, for example, of hard-metal or a ceramic material.

19. A clamping device according to one or more claims,
    characterized in that
    the interposition of at least one axial shim ring (49) between the guide bush (5) and the spindle (2).

## Revendications

1. Dispositif de serrage pour le serrage axial d'une tête d'outil ou d'un outil (1), sur une broche de machine-outil (2).
    a) L'outil (1)
        aa) peut être introduit par une douille de serrage (31) de forme tubulaire, selon la direction de l'axe central (17), dans un évidement frontal (16) de la broche de machine-outil (2), et
        bb) peut être serré dans la direction axiale (29) à l'aide d'organes d'expansion, qui
            -sont disposés de manière régulièrement répartie autour de l'axe central (17),
            -qui peuvent être écartés au moyen d'un dispositif d'entraînement de serrage central, et
            -qui sollicitent ainsi la paroi intérieure de la douille de serrage (31), d'une manière telle
                --que l'outil (1) soit tiré pour venir se mettre sensiblement en appui plan, avec une surface frontale (30), contre une surface frontale conjuguée (50) de l'extrémité de la broche de machine-outil (2).
        Caractéristique
    c) Les organes d'expansion sont constitués par des leviers d'expansion (6) à un bras, montés sur la broche (2) par leur extrémité dirigées vers l'outil (1).
    d) L'extrémité libre pivotante de chaque levier d'expansion (6), éloignée de l'outil (1), peut être pivotée vers l'extérieur, dans un plan radial renfermant l'axe central (17) et s'étendant radialement par rapport à celui-ci.

e) En position de serrage, les leviers d'expansion (6) pivotés vers l'extérieur, sollicitent, avec leurs extrémités pivotantes, sensiblement dans leur direction longitudinale, une surface annulaire (32) disposée sur la paroi intérieure de la douille de serrage (31), essentiellement selon une direction de serrage axiale (29).

2. Dispositif de serrage selon la revendication 1,
caractérisé

-par un tirant (3) qui est logé de manière coulissante en direction longitudinale dans la broche de machine-outil (2), coaxialement à celle-ci,

-et qui peut être sollicité dans la direction de serrage (29) par le dispositif d'entraînement de serrage,

-et par des rampes inclinées de serrage (20, 26) disposées sur la périphérie du tirant, qui

-forment un angle aigu (angles 21, 24) avec l'axe central (17), le sommet de ces angles étant orienté vers la direction de serrage (29), et qui

-pour la transmission de l'entraînement de serrage, sollicitent des branches de commande (11) s'étendant, à partir des extrémités pivotantes libres des leviers d'expansion (6), radialement vers l'intérieur de la trajectoire de translation du dispositif d'entraînement de serrage, en repoussant ainsi radialement vers l'extérieur les extrémités pivotantes des leviers d'expansion (6).

3. Dispositif d'entraînement de serrage selon la revendication 1 ou 2,
caractérisé

en ce que les leviers d'expansion (6) sont montés dans des évidements (7) qui traversent la périphérie d'une douille de guidage (5) qui est reliée de manière fixe à la broche de machine-outil (2) et qui entoure le tirant (3), et s'appuient par leurs extrémités de montage, sur les flancs (9), situés près de l'outil (1), des évidements (7).

4. Dispositif de serrage selon la revendication 3,
caractérisé

en ce que les extrémités de montage des leviers d'expansion (6) comportent une protubérance en forme de segment de sphère convexe ou de segment de cylindre, et sont ainsi appliquées contre un flanc des évidement (7), creusé en forme de cavité, en formant un montage de palier du type à rotule ou à segment cylindrique.

5. Dispositif de serrage selon l'une ou plusieurs des revendications précédentes,
caractérisé

par une forme coudée des leviers d'expansion (6), correspondant approximativement à une forme de "L" majuscule,

a) la branche du "L" (13) montée tournante constituant essentiellement le bras de levier agissant en tant que branche de compression, d'un levier à un seul bras, et

b) la branche du "L" (11) qui comporte l'extrémité pivotante, s'engageant radialement vers l'intérieur dans la trajectoire de translation du dispositif d'entraînement de serrage (tirant 3) pourvu de rampes inclinées de serrage (20, 26), en faisant office de branche de commande de l'expansion.

6. Dispositif de serrage selon la revendication 5,
caractérisé

en ce que dans la position de desserrage, les leviers d'expansion (6) sont logés,

-avec leur branche de "L" (13) agissant en tant que branche de compression, dans les évidements (7) de la douille de guidage (5) en s'étendant sensiblement de manière parallèle à l'axe central (17), et

-avec leur branche de "L" de commande (11), dans des évidements périphériques (12) du tirant (3),

les flancs des évidements périphériques (12) orientés dans la direction de serrage (29), formant avec l'axe central (17), en tant que rampes inclinées de serrage (26), un angle d'inclinaison aigu (24), dont le sommet est orienté dans la direction de serrage (29).

7. Dispositif de serrage selon la revendication 6,
caractérisé

en ce que l'angle d'inclinaison (24) vaut entre 45° et 75°, et notamment environ 60°.

8. Dispositif de serrage selon l'une des revendications 5 à 7,
caractérisé

en ce que les extrémités de montage des branches de "L" de commande (11) logées dans les évidements périphériques (12), s'appuient chacune avec son côté intérieur (22) bombé de manière convexe à la manière d'une surface-enveloppe en forme de segment de sphère ou de cylindre, contre un flanc intérieur de rampe inclinée de serrage (26), de l'évidement périphérique (12), et faisant office de rampe inclinée de serrage.

9. Dispositif de serrage selon l'une des revendications 3 à 8,

caractérisé
en ce que sur la périphérie du tirant (3), à l'encontre de la direction de serrage (29), de manière adjacente à chaque évidement (12), est disposée une rampe inclinée de serrage (20) qui forme avec l'axe central (17), un angle aigu (21) dont le sommet est orienté dans la direction de serrage (29), et qui est inférieur à l'angle d'inclinaison (24) des évidements périphériques (12), à savoir des rampes inclinées de serrage intérieures (26) associées.

10. Dispositif de serrage selon la revendication 9,
    caractérisé
    par un choix de la dimension de l'angle de rampe inclinée de serrage (21), tel que l'appui de la branche de "L" de commande (11) du levier d'expansion (6) soit auto-bloquant.

11. Dispositif de serrage selon l'une ou plusieurs des revendications,
    caractérisé
    par une position des flancs extérieurs (25) agissant en tant que rampes inclinées de rappel, correspondant environ à l'angle d'inclinaison (24), sensiblement parallèle aux flancs intérieurs formant rampes inclinées de serrage (26), de manière à ce que chaque évidement périphérique (12), dans la position de desserrage, entoure avec ses deux flancs, avec jeu, la branche de "L" de commande (11) qui lui est associée, et sollicite la branche de "L" de commande (11) dans la direction du desserrage, lors d'un déplacement du tirant, de la position de serrage vers la position de desserrage.

12. Dispositif de serrage selon l'une ou plusieurs des revendications,
    caractérisé
    en ce que l'angle (28) formé par les deux branches du "L" (11, 13) du levier d'expansion (6), est un angle obtus.

13. Dispositif de serrage selon l'une ou plusieurs des revendications,
    caractérisé
    en ce que lors du serrage, les leviers d'expansion (6) font saillie hors des évidements (7) de la douille de guidage (5), avec les zones de coin (54) des côtés extérieurs (27) de leurs branches de "L" de commande (11), et sollicitent la surface annulaire (32) de la paroi périphérique (34) de la douille de serrage (31), en vue d'engendrer une pression de serrage axiale.

14. Dispositif de serrage selon la revendication 13,
    caractérisé
    en ce que la surface annulaire (32) est formée par une enveloppe conique qui forme avec l'axe central (17), un angle aigu (33), dont le sommet est orienté dans la direction de serrage (29).

15. Dispositif de serrage selon l'une ou plusieurs des revendications,
    caractérisé
    en ce que le côté frontal (35) situé côté outil, d'une douille de rappel (37) sollicitée par un ressort de compression à l'encontre de la direction de serrage (29) et entourant le tirant (3), s'appuie en guise de surface de rappel, contre le côté extérieur (27) de la branche de "L" de commande (11) des leviers d'expansion (6).

16. Dispositif de serrage selon l'une ou plusieurs des revendications,
    caractérisé
    en ce que l'extrémité avant (38) du tirant (3) agit en tant que cheville d'éjection, contre l'outil (1).

17. Dispositif de serrage selon l'une ou plusieurs des revendications,
    caractérisé
    en ce que le tirant (3) est pourvu d'un alésage de passage (19) pour du liquide de refroidissement ou analogue.

18. Dispositif de serrage selon l'une ou plusieurs des revendications,
    caractérisé
    en ce que les flancs de rampes inclinées de serrage (26) du tirant (3) font partie d'une bague de pression (57) rapportée sur le tirant (3) et réalisée en un matériau de résistance très élevée à la pression, par exemple en métal dur ou en céramique.

19. Dispositif de serrage selon l'une ou plusieurs des revendications,
    caractérisé
    par l'insertion d'au moins une rondelle-entretoise axiale (49), entre la douille de guidage (5) et la broche (2).

Fig. 1

**Fig. 2**

Fig. 3

EP 0 391 262 B1

EP 0 391 262 B1

Fig. 4

_Fig. 5_

50

53

52

2

34

47

16

16a

17

51

16

EP 0 391 262 B1

Fig. 6

Fig. 7

Fig. 8

**Fig. 9**

(A – A)

EP 0 391 262 B1

**Fig. 11** (C–C)

**Fig. 10** (B–B)

20

Fig. 12